# DEMANDE DE BREVET EUROPEEN

(11) **EP 0 643 272 A1**
(43) Date de publication de la demande: **15.03.1995**
(21) Numéro de dépôt: 94460033.7
(22) Date de dépôt: 15.09.1994
(51) Int. Cl.: F24F 11/00, A01K 1/00

(54) **Système de commande d'au moins une unité de ventilation pour une installation de climatisation d'un bâtiment d'élevage**

(30) Priorité: 15.09.1993 FR 9311190
(71) Demandeur: SODALEC SA, F-35740 Pace (FR)
(72) Inventeur: L'Huillier, Francis, F-35740 Pace (FR)
(74) Mandataire: Le Guen, Louis François

(57) **Abrégé**

La présente invention concerne une système de commande d'une ou plusieurs unités de ventilation (Vent) pour une installation de climatisation d'un bâtiment d'élevage, système comportant une unité de commande (UC) prévue pour déterminer des valeurs d'un signal de régulation (Sᵣₑ) en fonction d'une ou plusieurs variables climatiques mesurées par au moins une sonde (STᵢ, STₑ, Sₕ) et en fonction de paramètres de consigne (C₁, Cₙ) et pour délivrer ledit signal de régulation (Sᵣₑ) à ladite ou auxdites unités de ventilation (Vent).

Il comporte en outre un circuit de transformation (CT) pour délivrer, à ladite ou à chaque unité de ventilation (Vent), un signal de commande (Sc) dont la valeur est déduite de la valeur du signal de régulation (Sᵣₑ) déterminée par l'unité de commande (UC) par application d'une fonction de transfert définie par au moins trois couples ou au moins trois paramètres, et des moyens (CI) pour permettre à l'utilisateur de fournir ladite fonction de transfert audit système.

## Description

La présente invention concerne un système de commande d'au moins une unité de ventilation pour une installation de climatisation d'un bâtiment d'élevage.

Dans les bâtiments d'élevage, pour maintenir des conditions climatiques sensiblement constantes, on dispose d'une installation de climatisation pourvue d'une unité de ventilation pour insuffler ou extraire, via des canalisations appropriées, plus ou moins d'air à l'intérieur ou de l'intérieur du bâtiment. Cette unité de ventilation est pilotée par un système de commande pour réguler le flux d'air, la vitesse de l'air ou le débit de l'air ventilé en fonction, notamment des paramètres climatiques régnant à l'intérieur du bâtiment, tels que sa température ambiante et/ou son taux d'hygrométrie, mais aussi en fonction de paramètres physiques des occupants, tels que le poids des animaux, leur âge, etc.

On connaît déjà des systèmes de commande d'une unité de ventilation pour installation de climatisation de bâtiment et on citera à titre d'exemple les documents de brevet FR-A-2 199 584, FR-A-2 215 589 et EP-A-140 734.

Ils sont généralement constitués d'une unité de commande qui est reliée à une ou plusieurs sondes de température ou d'hygrométrie ainsi qu'à des dispositifs d'établissement de consigne de température ou d'hygrométrie, ladite unité étant prévue pour commander une unité de ventilation comportant un ou plusieurs ventilateurs.

Dans le document de brevet FR-A-2 199 584, on commande la vitesse de rotation du moteur d'un ventilateur au moyen d'un variateur de vitesse électronique.

Le document FR-A-2 215 589 montre un système de régulation qui comporte une unité de commande constituée d'un circuit électronique du type comparateur et d'une interface de puissance à interrupteur électronique du type triac ou thyristor prévue pour faire varier la tension aux bornes du moteur d'un ventilateur et donc sa vitesse de rotation.

Enfin, le document EP-A-140 734, montre un système qui comporte également une unité de commande prévue pour piloter proportionnellement la vitesse de rotation d'un ventilateur.

Les systèmes de l'art antérieur comportent donc généralement une unité de commande prévue pour déterminer des valeurs d'un signal de régulation en fonction, d'une part, d'une ou plusieurs variables climatiques mesurées par au moins une sonde et, d'autre part, en fonction de paramètres de consigne et pour délivrer ledit signal de régulation à ladite ou auxdites unités de ventilation.

A l'usage, ces systèmes présentent l'inconvénient qu'ils peuvent donner entière satisfaction lorsqu'ils sont en fonctionnement sur une installation présentant des caractéristiques données et pas lorsqu'ils sont en fonctionnement sur une installation de caractéristiques différentes. Ces caractéristiques sont liées aux dimensions des canalisations utilisées pour la ventilation, des caractéristiques électriques et aérodynamiques des ventilateurs, des dimensions du bâtiment, etc.

Le but de l'invention est de proposer un système de commande d'au moins une unité de ventilation qui soit pourvu de moyens pour permettre de résoudre ce problème.

A cet effet, un système de commande selon l'invention est caractérisé en ce qu'il comporte un circuit de transformation pour délivrer, à ladite ou à chaque unité de ventilation, un signal de commande dont la valeur est déduite de la valeur du signal de régulation déterminée par l'unité de commande par application d'une fonction de transfert définie par au moins trois couples ou au moins trois paramètres, et des moyens pour permettre à l'utilisateur de fournir ladite fonction de transfert audit système.

Selon une autre caractéristique de l'invention, ledit circuit de transformation est prévu pour associer, à chacune d'au moins trois valeurs prédéterminées du signal de régulation, au moins une valeur de commande, et pour posséder une fonction de transfert entre le signal de régulation et le signal de commande que chaque association de valeurs vérifie.

Selon une autre caractéristique de l'invention, lesdits moyens sont constitués d'un circuit d'interfaçage prévu pour permettre à l'utilisateur de fournir audit circuit de transformation ladite ou lesdites valeurs de commande de manière à l'associer ou à les associer à une valeur prédéterminée du signal de régulation.

Selon une autre caractéristique de l'invention, ledit circuit de transformation comporte une mémoire dont chaque case est adressée par un signal de valeur proportionnelle à la valeur du signal de régulation déterminée par ladite unité de commande, chaque case contenant une ou plusieurs valeurs du signal de commande.

Selon une autre caractéristique de l'invention, le ou chaque signal de commande est fourni à un système d'asservissement de la tension présente aux bornes du moteur d'un ventilateur.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:
la Fig. 1 est un schéma synoptique d'un système de commande d'une unité de ventilation selon l'art antérieur,
la Fig. 2 est un schéma synoptique d'un système de commande selon un premier mode de réalisation de l'invention, et
la Fig. 3 est un schéma synoptique d'un système de commande selon un second mode de réalisation de l'invention.

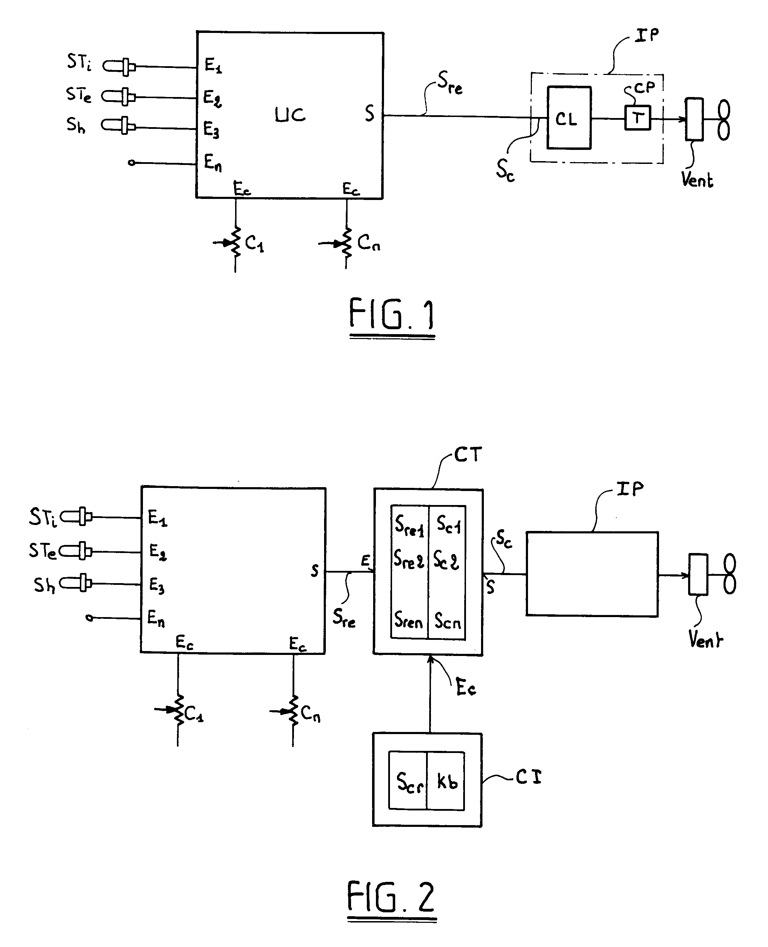

Le système de commande représenté à la Fig. 1 est un système selon l'art antérieur. Il comprend une unité de commande UC pourvue d'entrées E₁ à Eₙ destinées à être reliées à des sondes de mesure de variables climatiques telles qu'une ou plusieurs sondes S_{Ti} de mesure de la température ambiante à l'intérieur du bâtiment à ventiler, une ou plusieurs sondes de mesure de la température extérieure S_{Te}, une ou plusieurs sondes Sₕ de mesure du taux d'hygrométrie à l'intérieur du bâtiment, etc. Elle est également pourvue d'entrées Ec destinées à recevoir des signaux de consigne engendrés par des dispositifs d'établissement de consigne C₁ à Cₙ.

Elle comporte encore une sortie S sur laquelle elle délivre un signal de régulation Sᵣₑ dont la valeur est une fonction, d'une part, des valeurs des signaux de mesure respectivement engendrés par les sondes STᵢ, STₑ et Sₕ et, d'autre part, des signaux de consigne respectivement engendrés par les dispositifs d'établissement de consigne C₁ à Cₙ.

La sortie S de l'unité UC est reliée, dans l'exemple de réalisation représenté, à l'entrée d'une interface de puissance IP dont la sortie est reliée à une entrée de commande d'une ou plusieurs unité de ventilation pour pouvoir les piloter. Chaque unité de ventilation peut comporter plusieurs ventilateurs, pas nécessairement montés dans un même caisson.

Dans la suite de la description, on considérera un seul ventilateur Vent, mais il est bien entendu que l'invention s'applique également à des unités de ventilation telles qu'il vient d'être décrit.

Les moteurs des ventilateurs généralement utilisés étant du type asynchrone glissant, l'interface IP comprend un composant de puissance CP tel qu'un triac, un alternistor ou un thyristor, dont l'angle de conduction est contrôlé par le signal de commande Sc.

L'interface IP est représentée avec un triac T. Elle comporte également un circuit de linéarisation CL pour commander le triac T de manière que le ventilateur délivre un débit réduit pour une valeur nulle du signal de régulation Sᵣₑ, de manière qu'il délivre un débit maximum pour la valeur maximale que peut prendre le signal de régulation Sᵣₑ et de manière qu'entre ces deux points, le débit soit sensiblement proportionnel à la valeur du signal de régulation Sᵣₑ.

La fonction de transfert du circuit CL est affine. Le débit dont il est question ici est un débit moyen pour une installation-type fictive et ne correspond pas nécessairement au débit réel pour une installation particulière donnée.

On notera que si plusieurs ventilateurs sont prévus, plusieurs interfaces de puissance peuvent être nécessaires.

Le fonctionnement d'un système de commande selon l'art antérieur est le suivant. En fonction des paramètres mesurés par les sondes de température et/ou d'hygrométrie STᵢ, STₑ et Sₕ et des consignes définies par les dispositifs d'établissement de consigne C₁ à Cₙ, l'unité de commande UC engendre un signal de régulation Sᵣₑ qui est délivré à l'entrée de l'interface de puissance IP laquelle pilote le ventilateur Vent. La valeur du signal de régulation Sᵣₑ délivré par l'unité UC est représentative d'un besoin en ventilation lié à un ou plusieurs paramètres de ventilation suivant: la vitesse de l'air en sortie du ventilateur, le débit d'air, etc. Ce besoin peut, par exemple, s'exprimer en pourcentage de la valeur maximale prise par un des paramètres ci-dessus.

Le problème que pose un tel système est que la correspondance entre la valeur du signal de régulation Sᵣₑ et les paramètres de ventilation dépend des caractéristiques de l'installation de ventilation et du bâtiment telles que les caractéristiques du ou des ventilateurs utilisés, les caractéristiques des conduites d'amenée et/ou d'extraction d'air, notamment leur perte de charge, les caractéristiques du bâtiment, etc. En conséquence, de tels systèmes ne donnent pas entière satisfaction.

On a représenté à la Fig. 2 un schéma synoptique d'un système selon l'invention. Les éléments déjà présents dans le système de la Fig. 1 portent les mêmes références et accomplissent les mêmes fonctions. Il s'agit notamment de l'unité de commande UC, de l'interface IP et du ventilateur Vent.

Le système représenté à la Fig. 2 comporte en plus de celui de la Fig. 1, un circuit de transformation CT dont l'entrée E est reliée à la sortie de l'unité UC pour y recevoir le signal de régulation Sᵣₑ et dont la sortie S est reliée à l'entrée de l'interface de puissance IP pour y délivrer un signal de commande S_{c}. Il comporte encore une entrée Ec qui est reliée à un circuit d'interfaçage CI.

Le circuit de transformation CT est prévu pour associer à au moins trois valeurs prédéterminées Sᵣₑ₁, Sᵣₑ₂, Sᵣₑₙ que peut prendre le signal de régulation Sᵣₑ issu de la sortie de l'unité UC et présent sur son entrée E, des valeurs Sc₁, Sc₂, Scₙ du signal de commande Sc délivré à l'interface IP. Lorsque le signal Sᵣₑ en sortie de l'unité de commande UC prend une des valeurs prédéterminées mentionnées ci-dessus Sᵣₑ₁, Sᵣₑ₂, Sᵣₑₙ, le circuit de transformation CI délivre un signal de commande Sc dont la valeur est la valeur associée S_{c} à la valeur Sᵣₑ. Entre deux valeurs consécutives Sᵣₑᵢ et S_{rei + 1}, le circuit CT associe une valeur Sc qui est obtenue par extrapolation, par exemple par extrapolation linéaire, à partir des valeurs Sᵣₑᵢ et S_{rei + 1} et des valeurs Scᵢ et Sc_{i + 1} associées.

Le circuit de tranformation CT est donc prévu pour associer, à chacune d'au moins trois valeurs prédéterminées du signal de régulation Sᵣₑ₁, Sᵣₑ₂, Sᵣₑₙ, au moins une valeur de commande Sc, et pour posséder une fonction de transfert que chaque association de valeurs vérifie. De manière générale, la fonction de transfert du circuit de transformation CT est définie par au moins trois couples ou au moins trois paramètres.

Selon un mode de réalisation, le circuit de transformation CT comporte une mémoire dont chaque case est adressée par un signal Sᵣₑ et dont chaque case contient la valeur Sc associée.

Le circuit d'interfaçage CI est prévu pour permettre à un utilisateur de fournir, au circuit de transformation CT, chacune des valeurs Sc qu'il associe à une valeur Sᵣₑ. Il peut comporter un écran Scr sur lequel le système affiche une demande d'entrée d'une valeur Sᵣₑᵢ correspondant à une valeur Sc et un clavier Kb pour entrer la valeur Scᵢ désirée.

Ainsi, le circuit d'interfaçage CI constitue un moyen pour permettre à l'utilisateur de fournir ladite fonction de transfert audit système, notamment au circuit de transformation CT.

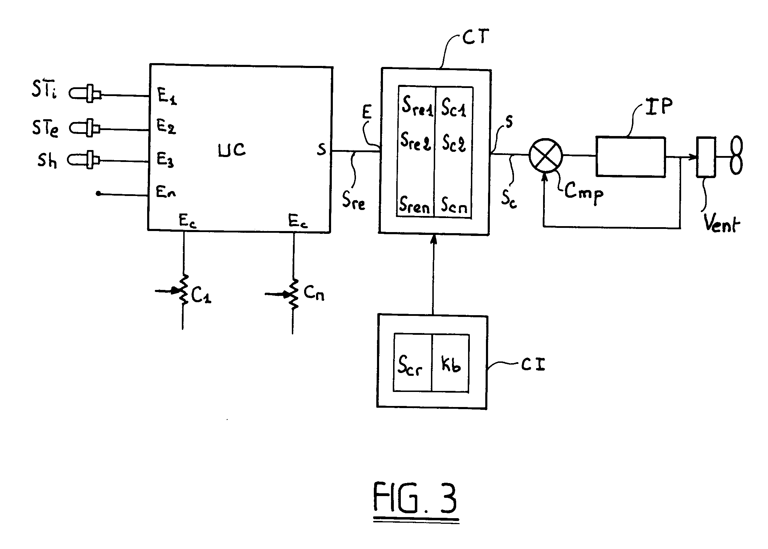

On a représenté à la Fig. 3 un système de commande similaire au système de commande de la Fig. 2 mais qui comporte en outre un comparateur Cmp dont une entrée est reliée à la sortie S du circuit de transformation CT, l'autre entrée à la sortie de l'interface de puissance IP et dont la sortie est reliée à l'entrée de l'interface de puissance IP. Le comparateur Cmp et l'interface IP constituent un système d'asservissement de la tension délivrée au ventilateur Vent. Un système de commande comprenant un tel système d'asservissement présente l'avantage d'être insensible aux éventuelles baisses de tension du secteur.

## Revendications

**1)** Système de commande d'une ou plusieurs unités de ventilation (Vent) pour une installation de climatisation d'un bâtiment d'élevage, système comportant une unité de commande (UC) prévue pour déterminer des valeurs d'un signal de régulation (Sᵣₑ) en fonction d'une ou plusieurs variables climatiques mesurées par au moins une sonde (STᵢ, STₑ, Sₕ) et en fonction de paramètres de consigne (C₁, Cₙ) et pour délivrer ledit signal de régulation (Sᵣₑ) à ladite ou auxdites unités de ventilation (Vent), caractérisé en ce qu'il comporte en outre un circuit de transformation (CT) pour délivrer, à ladite ou à chaque unité de ventilation (Vent), un signal de commande (Sc) dont la valeur est déduite de la valeur du signal de régulation (Sᵣₑ) déterminée par l'unité de commande (UC) par application d'une fonction de transfert définie par au moins trois couples, et des moyens (CI) pour permettre à l'utilisateur de fournir ladite fonction de transfert audit système.

**2)** Système de commande selon la revendication 1, caractérisé en ce que ledit circuit de transformation (CT) est prévu pour associer, à chacune d'au moins trois valeurs prédéterminées du signal de régulation (Sᵣₑ₁, Sᵣₑ₂, Sᵣₑₙ), au moins une valeur de commande (Sc), et pour posséder une fonction de transfert que chaque association de valeurs vérifie.

**3)** Système de commande selon la revendication 2, caractérisé en ce qu'entre deux valeurs consécutives prédéterminées dudit signal de régulation (S_{reᵢ}, S_{re_{i + 1}}), le circuit (CT) associe une valeur de commande (Sc) qui est obtenue par extrapolation à partir desdites valeurs consécutives et des valeurs de commande associées (S_{cᵢ}, S_{c_{i + 1}}).

**4)** Système de commande selon la revendication 2 ou 3, caractérisé en ce que lesdits moyens sont constitués d'un circuit d'interfaçage (CI) prévu pour permettre à l'utilisateur de fournir audit circuit de transformation (CT) ladite ou lesdites valeurs de commande (Sc) de manière à l'associer à une valeur prédéterminée (Sᵣₑ) du signal de régulation.

**5)** Système de commande selon une des revendications précédentes, caractérisé en ce que ledit circuit de transformation (CT) comporte une mémoire dont chaque case est adressée par un signal proportionnel à la valeur du signal de régulation (Sᵣₑ) déterminée par ladite unité de commande (UC), chaque case contenant une ou plusieurs valeurs du signal de commande (Sc).

**6)** Système de commande selon une des revendications précédentes, caractérisé en ce que le ou chaque signal de commande (Sc) est fourni à un système (Cmp, IP) d'asservissement de la tension présente aux bornes du moteur d'un ventilateur de chaque unité de ventilation (Vent).
